# EUROPÄISCHE PATENTANMELDUNG

(11) **EP 4 266 547 A1**
(43) Veröffentlichungstag der Anmeldung: **25.10.2023**
(21) Anmeldenummer: 22169255.1
(22) Anmeldetag: 21.04.2022
(51) Int. Cl.: H02K 3/38, H02K 15/12, H02K 15/10

(54) **STATOR FÜR EINE ELEKTRISCHE MASCHINE, FORMWERKZEUG ZUR HERSTELLUNG EINES STATORS, VERFAHREN ZUR HERSTELLUNG EINES STATORS UND ELEKTRISCHE MASCHINE FÜR EIN FAHRZEUG**

(71) Anmelder: Valeo eAutomotive Germany GmbH, 91056 Erlangen (DE)
(72) Erfinder: Dietz, William, 97616 c/o VSeA, Bad Neustadt a.d.Saale (DE)
(74) Vertreter: Valeo Powertrain Systems

(57) **Zusammenfassung**

Stator (1) für eine elektrische Maschine (101), aufweisend:
- einen Statorkern (2), der eine axiale Stirnseite (3) aufweist;
- mehrere Formleiter (6), die an der Stirnseite (3) aus dem Statorkern (2) herausragen und jeweils an der Stirnseite (3) wenigstens einen ein freies Ende (7) des Formleiters (6) umfassenden Endabschnitt (8) aufweisen, wobei Anordnungen von wenigstens zwei der Endabschnitte (8) derart elektrisch leitfähig und mechanisch miteinander verbunden sind, dass Anordnung einen Verbindungsabschnitt (9), der eine erste in einer vorgegebenen Querschnittsebene (15) liegende erste Querschnittsfläche (16), die Eckabschnitte (17) und zwischen den Eckabschnitten liegenden Seitenabschnitte (18) aufweist, aufweist, ausbildet; und
- mehrere Isolationselemente (14), die jeweils wenigstens einen der Verbindungsabschnitte (9) einhüllen und aus einem elektrisch isolierenden Material gebildet sind;
wobei jedes Isolationselement (9) eine in der Querschnittsebene (15) liegende zweite Querschnittsfläche (19) aufweist, die für jeden Eckabschnitt (17) der ersten Querschnittsfläche (16) des durch das Isolationselement (14) eingehüllten Verbindungsabschnitts (9) eine Zusatzfläche (20) und zwischen den Zusatzflächen (20) liegende Seiten (21) aufweist, wobei sich eine jeweilige der Zusatzflächen (20) weiter in eine von ersten Querschnittsfläche (16) wegweisende Richtung erstreckt als die Seiten (21), die an die Zusatzfläche (20) angrenzen.

## Beschreibung

Die vorliegende Erfindung betrifft einen Stator für eine elektrische Maschine, aufweisend: einen Statorkern, der eine axiale Stirnseite aufweist; mehrere Formleiter, die an der Stirnseite aus dem Statorkern herausragen und jeweils an der Stirnseite wenigstens einen ein freies Ende des Formleiters umfassenden Endabschnitt aufweisen, wobei Anordnungen von wenigstens zwei der Endabschnitte derart elektrisch leitfähig und mechanisch miteinander verbunden sind, dass jede Anordnung einen Verbindungsabschnitt, der eine erste in einer vorgegebenen Querschnittsebene liegende erste Querschnittsfläche, die Eckabschnitte und zwischen den Eckabschnitten liegenden Seitenabschnitte aufweist, aufweist, ausbildet; und mehrere Isolationselemente, die jeweils wenigstens einen der Verbindungsabschnitte einhüllen und aus einem elektrisch isolierenden Material gebildet sind.

Daneben betrifft die Erfindung ein Formwerkzeug zur Herstellung eines Stators, ein Verfahren zur Herstellung eines Stators, eine elektrische Maschine für ein Fahrzeug sowie ein Fahrzeug.

US 2013/0049514 A1 offenbart eine elektrische Maschine mit einem Stator. Der Stator weist einen Statorkern und eine Statorwicklung auf, die eine Vielzahl von Leitersegmenten mit einem aus einem axialen Ende des Statorkerns herausragenden Spulenendabschnitt aufweist. Die Spulenendabschnitte weisen gefügte Endabschnitte auf. Eine Fügefläche zwischen den gefügten Endabschnitten ist von einem Isolationsteil aus einem Harz bedeckt.

Isolationselemente dienen bei einem mit Formleitern gebildeten Stator der Isolation von elektrisch leitfähig und mechanisch verbundenen Verbindungsabschnitten. Die Isolationselementen können beispielsweise durch Eintauchen in ein Beschichtungsmaterial, beispielsweise ein Pulver oder ein Gel, ausgebildet werden.

Nachteilig ist dabei, dass das Isolationselement aufgrund von Kantenflucht des Beschichtungsmaterials im Bereich von Eckabschnitten der Verbindungsabschnitte nur mit einer geringen Materialstärke ausgebildet wird. Solche Eckabschnitte sind aber typischerweise jene Bereiche, an den die größten elektrischen Feldstärken auftreten und daher gerade einer effizienten Isolierung bedürfen. Wird der Prozess des Eintauchens hingegen so geführt, dass eine möglichst große Materialstärke der Isolationselemente erzielt wird, besteht wiederum die Gefahr von Brückenbildungen zwischen den Isolationselementen benachbarter Verbindungsabschnitte. Durch solche Brücken besteht eine erhöhte Gefahr einer Rissbildung, welche durch Eigenspannungen, aber auch durch den Betrieb der elektrischen Maschine, also (unerwünschte) Schwingungen und Vibrationen weiter begünstig wird. Dadurch können Spannungsdurchschläge auftreten. Außerdem kann das elektrisch leitende Material der Formleiter freigelegt werden.

Es wurde bereits vorgeschlagen, sämtliche Verbindungsabschnitte unmittelbar an den Statorkern anschließend durch einen einzigen Vergusskörper zu vergießen, d. h. einen sogenannten Vollverguss durchzuführen. Dies führt aber zu erhöhten Material- und Prozesskosten, zu einer schlechteren Leistungsdichte und zu Effizienzverlusten beim Betrieb der elektrischen Maschine. Außerdem wird eine Wärmeabfuhr aus den Verbindungsabschnitten durch den Vergusskörper, insbesondere bei flüssigkeitsgekühlten Statoren, erschwert. Des Weiteren entstehen zusätzliche Kosten bzw. zusätzlicher Materialaufwand durch ein mit der Vergussmasse zu füllendes Spritzgussteil. Auch hier besteht die Gefahr einer Rissbildung bei Materialanhäufungen im Spritzgussteil.

Der Erfindung liegt die Aufgabe zugrunde, eine Möglichkeit zur verbesserten elektrischen Isolierung von Verbindungsabschnitten der Formleiter eines Stators anzugeben.

Diese Aufgabe wird erfindungsgemäß bei einem Stator der eingangs genannten Art dadurch gelöst, dass jedes Isolationselement eine in der Querschnittsebene liegende zweite Querschnittsfläche aufweist, die für jeden Eckabschnitt der ersten Querschnittsfläche des durch das Isolationselement eingehüllten Verbindungsabschnitts eine Zusatzfläche und zwischen den Zusatzflächen liegende Seiten aufweist, wobei sich eine jeweilige der Zusatzflächen weiter in eine von ersten Querschnittsfläche wegweisende Richtung erstreckt als die Seiten, die an die Zusatzfläche angrenzen.

Der erfindungsgemäße Stator weist einen Statorkern auf. Der Statorkern weist eine axiale Stirnseite auf. Der Stator weist ferner mehrere Formleiter auf. Die Formleiter ragen an der Stirnseite aus dem Statorkern heraus. Die Formleiter weisen jeweils an der Stirnseite einen Endabschnitt auf. Der Endabschnitt umfasst wenigstens ein freies Ende des Formleiters. Anordnungen von wenigstens zwei der Endabschnitte sind derart elektrisch leitfähig und mechanisch miteinander verbunden, dass jede Anordnung einen Verbindungsabschnitt ausbildet. Der Verbindungsabschnitt weist eine erste Querschnittsfläche auf. Die erste Querschnittsfläche liegt in einer vorgegebenen Querschnittsebene. Die erste Querschnittsebene weist Eckabschnitte auf. Die erste Querschnittsfläche weist ferner Seitenabschnitte auf. Die Seitenabschnitte liegen zwischen den Eckabschnitten. Der Stator weist ferner mehrere Isolationselemente auf. Die Isolationselemente hüllen jeweils wenigstens einen der Verbindungsabschnitte ein. Die Isolationselemente sind jeweils aus einem elektrisch isolierenden Material gebildet. Jedes Isolationselement weist eine zweite Querschnittsfläche auf. Die zweite Querschnittsfläche weist für jeden Eckabschnitt der ersten Querschnittsfläche des durch das Isolationselement eingehüllten Verbindungsabschnitts eine Zusatzfläche auf. Die zweite Querschnittsfläche weist ferner Seiten auf. Die Seiten liegen zwischen den Zusatzflächen. Eine jeweilige der Zusatzflächen erstreckt sich weiter in eine Richtung als die Seiten, die an die Zusatzfläche angrenzen. Die Richtung weist von der ersten Querschnittsfläche weg.

Bei dem erfindungsgemäßen Stator ist vorgesehen, dass die zweite Querschnittsfläche des Isolationselements für jeden Eckabschnitt der ersten Querschnittsfläche eine Zusatzfläche aufweist und so eine Vergrößerung der Materialstärke des Isolationselement dort realisiert, wo aufgrund der Geometrie der Verbindungsabschnitte mit erhöhten elektrischen Feldstärken zu rechnen ist. Dadurch kann unerwünschten Spannungsdurchschlägen im Bereich der Eckabschnitte wirksam vorgebeugt und die Isolationseffizienz der Isolationselemente erhöht werden. Gleichsam kann dadurch, dass sich die Zusatzflächen weiter in die von der ersten Querschnittsfläche wegweisende Richtung als die Seiten, die an die Zusatzfläche angrenzen, erstrecken, einer unerwünschten Brückenbildung zwischen den Seiten benachbarter Isolationselemente entgegengewirkt werden. Da an den Seitenabschnitten der ersten Querschnittsfläche der Verbindungsabschnitte typischerweise geringere elektrische Feldstärken als im Bereich der Eckabschnitte auftreten, wird außerdem eine hinreichend effiziente Isolierung im Bereich der Seitenabschnitte ermöglicht. Dadurch ist es möglich, die Isolationselemente bezüglich des Umfangs der Verbindungsabschnitte so dünn wie möglich und so dick wie nötig auszubilden.

Der Statorkern des erfindungsgemäßen Stators kann aus einer Vielzahl von axial geschichteten und/oder gegeneinander elektrisch isolierten Einzelblechen ausgebildet sein. Der Statorkern kann insoweit auch als Statorblechpaket erachtet werden. Der Statorkern kann eine der axialen Stirnseite gegenüberliegende weitere Stirnseite aufweisen. Im Statorkern kann eine Vielzahl von in Umfangsrichtung verteilt angeordneten Nuten ausgebildet sein, die sich axial von der Stirnseite zur weiteren Stirnseite erstrecken.

Vorzugsweise weist zumindest ein Teil der Formleiter an der Stirnseite zwei freie Enden auf. Zwischen den freien Enden kann sich der Formleiter einstückig in unterschiedlichen Nuten durch den Statorkern erstrecken. An der zweiten Stirnseite kann der Formleiter einen aus dem Statorkern herausragenden Biegeabschnitt aufweisen, der einen Versatz zwischen innerhalb des Statorkerns liegenden Innenabschnitten des Formleiters in Umfangsrichtung ausbildet.

Die Querschnittsebene steht insbesondere senkrecht zur Axialrichtung und/oder zur Erstreckungsrichtung der Endabschnitte. Die Zusatzflächen können jeweils als eine Ausbuchtung ausgebildet sein. Die Anordnungen der Endabschnitte können Paare der Endabschnitte sein. Jede Anordnung kann aber auch drei, vier oder mehr Endabschnitte umfassen. Die Anordnungen der Endabschnitte sind vorzugsweise stoffschlüssig, insbesondere durch Schweißen, elektrisch leitfähig und mechanisch miteinander verbunden. Bevorzugt ist vorgesehen, dass die Formleiter eine elektrisch isolierende Oberflächenbeschichtung aufweisen und im Bereich der Endabschnitte abisoliert sind, sodass das Isolationselement unmittelbar auf einem elektrisch leitfähigen Material der Formleiter aufliegen. Die Isolationselemente können mit der Oberflächenbeschichtung überlappen. Die Isolationselemente sind vorzugsweise aus einem in eine einstückige, feste Form überführten Einhüllungsmaterials gebildet. Das Einhüllungsmaterial kann ein Harz, insbesondere ein EinKomponenten-Harz oder ein Zwei-Komponenten-Harz, sein, welches durch Aushärten und/oder Gelieren in die einstückige, feste Form überführt wurde. Das Einhüllungsmaterials kann auch ein Pulvermaterial , beispielsweise ein in Pulverform vorliegendes Harz, sein, welches beispielsweise durch einen Sinterprozess, insbesondere Wirbelsintern, in die einstückige, feste Form überführt wurde.

Bevorzugt weist jeder Verbindungsabschnitt vier Eckabschnitte und/oder vier Seitenabschnitte auf. Bevorzugt grenzt jede Zusatzfläche an zwei Seiten an. Jede Seite schließt sich bevorzugt an zwei Zusatzflächen unmittelbar an. Bevorzugt liegen die an eine Zusatzfläche angrenzenden Seiten auf zwei sich in einem rechten Winkel schneidenden Geraden.

Vorzugsweise sind die Verbindungsabschnitte entlang eines Kreises oder mehrerer konzentrischer Kreise über die Umfangsrichtung verteilt angeordnet.

Bei dem erfindungsgemäßen Stator können die Zusatzflächen einen geringen Radius als die Seiten aufweisen. Dadurch kann eine jeweilige Zusatzfläche eine den Eckabschnitt radial umgebende Isolation ausbilden. Insbesondere um den Materialverbrauch durch die Isolationselemente gering zu halten, ist es bevorzugt, dass die Seiten gerade verlaufen. Die Zusatzflächen können abgerundet sein. Die Seiten können gerade sein.

Die Seiten können einen welligen Verlauf aufweisen. Die Seiten können einen gebogenen, einem großen Radius folgenden Verlauf aufweisen. Verschiedene Seiten eines Isolationselementes können verschiedene oder gleiche Verläufe aufweisen.

Im Hinblick auf die Ausbildung der Isolationselemente durch ein einen Formkörper verwendendes Verfahren, wie es weiter unten erläutert wird, kann bei dem erfindungsgemäßen Stator ein Toleranzausgleich hinsichtlich der Lage der Verbindungsabschnitte zum Formkörper erzielt werden. Durch den Toleranzausgleich kann eine von einer exakten konzentrischen bzw. gleichmäßigen Verteilung der Verbindungsabschnitte abweichende und beispielsweise durch einen Biegeprozess der Endabschnitte verursachte Lageabweichung der Verbindungsabschnitte ausgeglichen werden:
So kann vorgesehen sein, dass die erste Querschnittsfläche vier der Eckabschnitte, einen durch einen Schnittpunkt von zwei im Umfang nicht benachbarte Eckabschnitte verbindenden Diagonalen definierten ersten Mittelpunkt aufweist und die zweite Querschnittsfläche vier der Zusatzflächen aufweist, einen durch einen Schnittpunkt von zwei im Umfang nicht benachbarte Zusatzflächen verbindenden Diagonalen definierten zweiten Mittelpunkt aufweist, wobei bei zumindest einem Teil der Verbindungsabschnitte und der sie einhüllenden Isolationselemente die Mittelpunkte gegeneinander verschoben sind, sodass der kleinste Abstand eines jeweiligen Eckabschnitts von einem Rand der ihm zugeordneten Zusatzfläche größer ist als der kleinste Abstand der Seitenabschnitte von den Seiten der zweiten Querschnittsfläche.

Alternativ oder zusätzlich kann bei dem erfindungsgemäßen Stator vorgesehen sein, dass bei zumindest einem Teil der Verbindungsabschnitte und der sie einhüllenden Isolationselemente die Seitenabschnitte der ersten Querschnittsfläche gegenüber den Seiten der zweiten Querschnittsfläche verdreht sind, sodass der kleinste Abstand eines jeweiligen Eckabschnitts von einem Rand der ihm zugeordneten Zusatzfläche größer ist als der kleinste Abstand der Seitenabschnitte von den Seiten der zweiten Querschnittsfläche.

Außerdem kann bei dem erfindungsgemäßen Stator vorgesehen sein, dass bei zumindest einem Teil der Verbindungsabschnitte und der sie einhüllenden Isolationselemente die zwei durch einen der Formleiter der Anordnung ausgebildeten Eckabschnitte gegenüber den zwei durch den oder einen anderen der Formleiter der Anordnung ausgebildeten Eckabschnitten verschoben sind, sodass der kleinste Abstand eines jeweiligen Eckabschnitts von einem Rand der ihm zugeordneten Zusatzfläche größer ist als der kleinste Abstand der Seitenabschnitte von den Seiten der zweiten Querschnittsfläche. Dadurch können Toleranzen der Lage zweier freier Ende der Formleiter beim Verbinden zum Verbindungsabschnitt ausgeglichen werden.

Es ist bei dem erfindungsgemäßen Stator darüber hinaus bevorzugt, dass jedes Isolationselement an den freien Enden eine konvexe Auswölbung aufweist. Eine solche Auswölbung kann eine ausreichende Materialstärke der Isolationselemente sicherstellen, wenn freien Enden der Formleiter auf ihren axialen Endflächen, beispielsweise unter Ausbildung rundlicher Materialansammlungen, verbunden werden.

Bei dem erfindungsgemäßen Stator kann außerdem vorgesehen sein, dass jedes Isolationselement einen sich von seinem dem Statorkern zugewandten Ende zu einer zwischen dem Ende und der Querschnittsebene liegenden Zwischenposition hin verjüngenden Verlauf aufweist. Ferner kann ein jeweiliges Isolationselement an der Zwischenposition unter Ausbildung eines Absatzes seine Materialstärke vergrößern. Dadurch kann am Ende eine kragenartige Aufweitung des Isolationselement ausgebildet werden, um zwischen voneinander wegweisende Biegungen der Formleiter zwischen dem Ende des Isolationselements und der Zwischenposition abzudecken.

Die der Erfindung zugrunde liegende Aufgabe wird ferner gelöst durch ein Formwerkzeug zur Herstellung eines, insbesondere erfindungsgemäßen, Stators für eine elektrische Maschine mit einem Formkörper und mehreren entlang eines Kreises angeordneten Sacklöchern, die dazu jeweils eingerichtet sind, einen Verbindungsabschnitt, der durch eine Anordnung von wenigstens zwei ein jeweiliges freies Ende von Formleitern des Stators umfassenden Endabschnitten, die elektrisch leitfähig und mechanisch miteinander verbunden sind, gebildet ist, und ein fließfähiges oder pulveriges Einhüllungsmaterial aufzunehmen.

Das erfindungsgemäße Formwerkzeug zur Herstellung eines Stators für eine elektrische Maschine weist einen Formkörper auf. Das Formwerkzeug weist ferner mehrere entlang eines Kreises angeordnete Sacklöcher auf. Die Sacklöcher sind jeweils dazu eingerichtet einen Verbindungsabschnitt aufzunehmen. Der Verbindungsabschnitt ist durch eine Anordnung von wenigstens zwei Endabschnitten gebildet. Die Endabschnitte umfassen jeweils ein freies Ende von Formleitern des Stators. Die Endabschnitte sind elektrisch leitfähig und mechanisch miteinander verbunden. Die Sacklöcher sind ferner dazu eingerichtet ein fließfähiges oder pulveriges Einhüllungsmaterial aufzunehmen.

Bei dem erfindungsgemäßen Formkörper können die Sacklöcher auch entlang mehrerer konzentrisch angeordneter Kreise angeordnet sein. Die Sacklöcher können mit einer eine Haftfähigkeit des Formkörpers reduzierenden Beschichtung ausgekleidet sein. Die Beschichtung ist vorzugsweise aus unpolaren und/oder eine geringe Oberflächenspannung aufweisenden Kunststoffen gebildet. Die Beschichtung umfasst insbesondere Silikone, Polytetrafluorethylen (PTFE), Fluorethylen-Propylen (FEP) oder Perfluoralkoxy-Polymere (PFA). Der Formkörper kann aus einem Metall gebildet sein. Der Formkörper aus einem nicht metallischen Werkstoff, beispielsweise einem, ggf. faserverstärkten, amorphen Kunststoff oder einer Keramik, gebildet sein. Die Sacklöcher können Auswurfschrägen aufweisen. Dabei können die Auswurfschrägen mit einer einen Rand der Sacklöcher bildenden Oberfläche des Formkörpers einen Winkel zwischen 2° und 4° einschließen.

Bei dem erfindungsgemäßen Formwerkzeug kann vorgesehen sein, dass jedes Sackloch eine in einer Querschnittsebene liegende Querschnittsfläche mit mehreren Zusatzflächen und die Zusatzflächen verbindende Seiten aufweist und sich eine jeweilige der Zusatzflächen jeweils weiter nach außen erstreckt als die an die jeweilige Zusatzfläche angrenzenden Seiten. Insofern bilden die Sacklöcher Negative der Isolationselemente aus, sodass sich alle vorangegangen Ausführungen zu den Isolationselementen entsprechend auf die Sacklöcher übertragen lassen.

Gemäß einer besonders bevorzugten Ausgestaltung ist vorgesehen, dass der Formkörper zumindest abschnittsweise für elektromagnetische Strahlen eines den Infrarotbereich und/oder den Bereich des sichtbaren Lichts und/oder den Ultraviolettbereich umfassenden Spektrums transluzent oder transparent ist, sodass die elektromagnetischen Strahlen aus dem Formkörper in die Sacklöcher eindringen können. Besonders bevorzugt umfasst das Spektrum einen Bereich von 300 nm bis 500 nm. Zweckmäßigerweise ist der Formkörper und ggf. auch die Beschichtung aus einem für die elektromagnetischen Strahlen beständigen Material ausgebildet. Der Formkörper kann aus einem Quarzglas, Polycarbonat, Polymethylmethacrylat (PMMA), Polyamid (PA), insbesondere PA12 amorph, oder aus einem Silikon mit oder ohne Faserverstärkung, beispielsweise durch ein Glasgewebe, ausgebildet sein.

In Weiterbildung kann vorgesehen sein, dass das Formwerkzeug wenigstens eine Quelle für die elektromagnetischen Strahlen aufweist. Die Quelle kann innerhalb des Formkörpers angeordnet sein. Alternativ oder zusätzlich ist die Quelle außerhalb des Formkörpers angeordnet ist, sodass die Strahlen durch eine optische Grenzfläche des Formkörpers in diesen eindringen können. Die Quelle kann beispielsweise auf der den Sacklöchern gegenüberliegenden Seite des Formkörpers angeordnet sein, um die Sacklöcher von unten zu bestrahlen. Die Quelle kann lichtemittierende Dioden (LED) umfassen. Durch die Quelle kann auch eine Wärmeabstrahlung erfolgen, um das Einhüllungsmaterial zum Überführen die feste, einstückige Form zu erwärmen.

Die der Erfindung zugrunde liegende Aufgabe wird ferner gelöst durch ein Verfahren zur Herstellung eines Stators für eine elektrische Maschine, insbesondere nach einem der vorhergehenden Ansprüche, aufweisend folgende Schritte: Bereitstellen eines erfindungsgemäßen Formwerkzeugs; Bereitstellen eines Statorkerns, der eine axiale Stirnseite aufweist, und mehrerer Formleiter, die an der Stirnseite aus dem Statorkern herausragen und jeweils an der Stirnseite wenigstens einen ein freies Ende des Formleiters umfassenden Endabschnitt aufweisen, wobei Anordnungen von wenigstens zwei der Endabschnitte derart elektrisch leitfähig und mechanisch miteinander verbunden sind, dass jede Anordnung einen Verbindungsabschnitt, der eine erste in einer vorgegebenen Querschnittsebene liegende erste Querschnittsfläche, die Eckabschnitte und zwischen den Eckabschnitten liegenden Seitenabschnitte aufweist, aufweist, ausbildet; Einfüllen eines fließfähigen oder pulverigen Einhüllungsmaterials in die Sacklöcher; Einführen der Verbindungsabschnitte in die Sacklöcher; Einhüllen-Lassen der Verbindungsabschnitte durch das Einhüllungsmaterial; und Überführen des Einhüllungsmaterials in eine feste, einstückige Form, sodass das Einhüllungsmaterial mehrere Isolationselemente ausbildet, die jeweils wenigstens einen der Verbindungsabschnitte einhüllen und sodass jedes Isolationselement eine in der Querschnittsebene liegende zweite Querschnittsfläche aufweist, die für jeden Eckabschnitt der ersten Querschnittsfläche des durch das Isolationselement eingehüllten Verbindungsabschnitts eine Zusatzfläche und zwischen den Zusatzflächen liegende Seiten aufweist, wobei sich eine jeweilige der Zusatzflächen weiter in eine von ersten Querschnittsfläche wegweisende Richtung erstreckt als die Seiten, die an die Zusatzfläche angrenzen.

Das Überführen des Einhüllungsmaterials in eine feste, einstückige Form kann durch ein Aushärten oder zumindest ein Angelieren oder Fixierien des Einhüllungsmaterials erfolgen. Im Fall des pulverigen Einhüllungsmaterials kann das Überführen durch einen Sinterprozess, insbesondere durch Wirbelsintern, erfolgen.

Mit besonderem Vorteil wird bei dem erfindungsgemäßen Verfahren ein Kompromiss zwischen herkömmlichen Eintauchprozessen und einem herkömmlichen Vollvergussprozess realisiert. Der Materialeinsatz des Einhüllungsmaterials ist erheblich geringer als bei einem Vollvergussprozess und nur unwesentlich größer als bei einem Eintauchprozess. Vorteilhafterweise wird durch die mittels der Zusatzfläche realisierte hohe Materialstärke eine gute Isolierung der Eckabschnitte erreicht und zusätzlich ein Toleranzausgleich bei der Position der Eckabschnitte ermöglicht.

Bei dem erfindungsgemäßen Verfahren kann vorteilhafterweise vorgesehen sein, dass das Einführen der Verbindungsabschnitte entlang einer Einführrichtung bis zu einer, insbesondere durch einen Anschlag in den Sacklöchern vorgegebenen, Einführposition erfolgt und das Verfahren ferner folgenden zwischen dem Schritt des Umfließen-Lassens und dem Schritt des Aushärtens durchgeführten Schritt aufweist: Entfernen eines ersten Teils der Verbindungsabschnitte aus den Sacklöchern entgegen der Einführrichtung, sodass der erste Teil der Verbindungsabschnitte durch das Einhüllungsmaterial benetzt ist und ein zweiter Teil der Verbindungsabschnitte innerhalb des Einhüllungsmaterials verbleibt. So lässt sich insbesondere die zuvor beschriebene Veränderung der Materialstärke im Bereich der Zwischenposition und eine Überdeckung des abisolierten zum bereits mit der Oberflächenbeschichtung isolierten Bereich des Formleiters einfach realisieren.

Bei dem erfindungsgemäßen Verfahren kann ferner vorgesehen sein, dass der Schritt des Überführens des Einhüllungsmaterials in eine feste, einstückige Form ein Bestrahlen des Einhüllungsmaterials mit den elektromagnetischen Strahlen umfasst.

Der Schritt des Überführens des Einhüllungsmaterials in eine feste, einstückige Form kann insbesondere ein Erwärmen des Einhüllungsmaterials umfassen. Dies kann beispielsweise mittels Stromwärme, eines Ofens, Infrarotstrahlung oder Induktion erfolgen. Es ist allerdings auch eine Kaltaushärtung möglich. Alternativ oder zusätzlich umfasst das erfindungsgemäße Verfahren ferner folgenden vor dem Schritt des Einführens durchgeführten Schritt aufweist: Erwärmen der Endabschnitte. Dadurch kann ein Abfall der Viskosität des Einhüllungsmaterials, insbesondere im Fall eines Harzes, ein verbesserter Luftblasenaustritt und eine effizientere Adhäsionsarbeit erzielt werden.

In bevorzugter Ausgestaltung des erfindungsgemäßen Verfahrens ist ferner ein Schritt des Entfernens der Verbindungsabschnitte mit den sie einhüllenden Isolationselementen aus dem Formwerkzeug vorgesehen. Dieser Schritt wird insbesondere nach einem Gelieren des Einhüllungsmaterials durchgeführt. An den Schritt des Entfernens kann sich ein weiterer Schritt des Durchführens eines Imprägnierprozesses mit weiterer, nachfolgender Aushärtung bzw. Verfestigung anschließen. Die Aushärtung des Isolationselementes kann auch nach weiterer Bearbeitung und zusammen mit einem Imprägnierharz des Stators stattfinden, sodass eine Zeit- und Kostenreduktion stattfindet.

Das erfindungsgemäße Verfahren kann vor den Schritten des Einfüllens des Einhüllungsmaterials und des Einführens der Verbindungsabschnitte ferner einen Schritt des Aufbringens eines die Haftfähigkeit des Formkörpers reduzierenden Materials in die Sacklöcher umfassen. Dazu können die bereits zuvor erwähnten Materialien (Silikon, PTFE, FEP, PFA) als verlorene Beschichtungen verwendet werden. Es ist auch denkbar, die Sacklöcher mit einem Trennwachs, Trennspray oder Trennlack als flüssig aufzubringendem Material zu benetzen.

Die der Erfindung zugrunde liegende Aufgabe wird ferner gelöst durch eine elektrische Maschine für ein Fahrzeug, aufweisend einen Rotor und einen erfindungsgemäßen Stator oder einen durch das erfindungsgemäße Verfahren erhaltenen Stator, wobei der Rotor drehbar im Statorkern gelagert ist.

Die elektrische Maschine ist vorzugsweise eine, insbesondere permanent oder elektrisch erregte, Synchronmaschine oder eine Asynchronmaschine. Die elektrische Maschine kann zum Antreiben des Fahrzeugs eingerichtet sein.

Die der Erfindung zugrunde liegende Aufgabe wird ferner gelöst durch ein Fahrzeug, aufweisend Räder zum Bewegen des Fahrzeugs und eine erfindungsgemäße elektrische Maschine, wobei die elektrische Maschine eingerichtet ist, wenigstens eines der Räder des Fahrzeugs zumindest indirekt anzutreiben.

Das erfindungsgemäße Fahrzeug ist z. B. ein reines Elektrofahrzeug bzw. ein batterieelektrisches Fahrzeug (BEV). Das erfindungsgemäße Fahrzeug kann auch ein Hybridfahrzeug sein, also neben der elektrischen Maschine noch einen weiteren Motor, insbesondere einen Verbrennungsmotor umfassen.

Die als Elektromotor ausgebildete elektrische Maschine des Fahrzeugs kann das wenigstens eine Rad direkt oder über ein zwischengeschaltetes Getriebe antreiben. Das Fahrzeug kann eine mit dem wenigstens einen Rad gekoppelte Achse aufweisen, die die als Elektromotor ausgebildete elektrische rotierende Maschine des Fahrzeugs direkt oder indirekt antreibt.

Sämtliche Ausführungen zum erfindungsgemäßen Stator lassen sich analog auf das erfindungsgemäße Formwerkzeug und das erfindungsgemäße Verfahren, die erfindungsgemäße elektrische Maschine und das erfindungsgemäße Fahrzeug übertragen, sodass auch mit diesen die zuvor genannten Vorteile erzielt werden können.

Weitere Vorteile und Einzelheiten der vorliegenden Erfindung ergeben sich aus den im Folgenden beschriebenen Ausführungsbeispielen sowie anhand der Zeichnungen. Diese sind schematische Darstellungen und zeigen:
- Fig. 1: eine Prinzipskizze eines ersten Ausführungsbeispiels des erfindungsgemäßen Stators;
- Fig. 2: eine Dreitafelprojektion des Stators gemäß dem ersten Ausführungsbeispiel im Bereich eines Isolationselements;
- Fig. 3 bis 5: jeweils eine geschnittene Ansicht des Stators gemäß dem ersten Ausführungsbeispiel zur Erläuterung von Fertigungstoleranzen;
- Fig. 6: eine perspektivische Ansicht des Stators gemäß einem zweiten Ausführungsbeispiel im Bereich eines Isolationselements;
- Fig. 7: eine geschnittene Ansicht des Stators gemäß dem zweiten Ausführungsbeispiel im Bereich des Isolationselements;
- Fig. 8: eine Draufsicht auf den Stator gemäß dem zweiten Ausführungsbeispiel im Bereich des Isolationselements;
- Fig. 9: ein Flussdiagramm eines ersten Ausführungsbeispiels des erfindungsgemäßen Herstellungsverfahrens;
- Fig. 10: eine perspektivische Darstellung eines Ausführungsbeispiels des erfindungsgemäßen Formwerkzeugs;
- Fig. 11: eine geschnittene Darstellung des Ausführungsbeispiels des Formwerkzeugs;
- Fig. 12: eine Prinzipskizze zur Erörterung eines zweiten Ausführungsbeispiels des erfindungsgemäßen Verfahrens und eines dritten Ausführungsbeispiels des erfindungsgemäßen Stators; und
- Fig. 13: eine Prinzipskizze eines Ausführungsbeispiels des erfindungsgemäßen Fahrzeugs mit einem Ausführungsbeispiel der erfindungsgemäßen elektrischen Maschine.

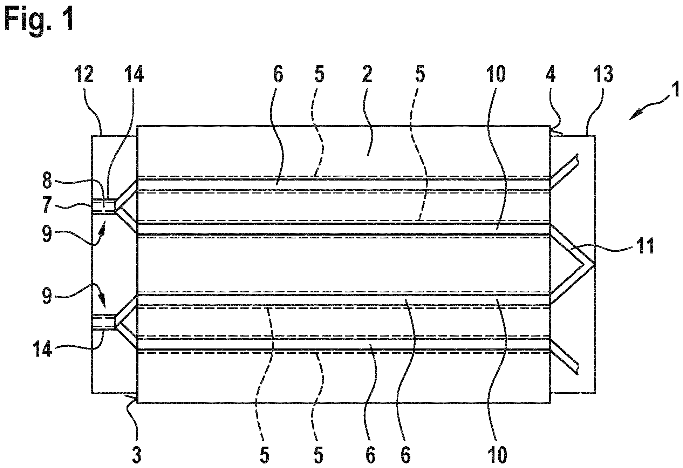

Fig. 1 ist eine Prinzipskizze eines ersten Ausführungsbeispiels eines Stators 1.

Der Stator 1 weist einen Statorkern 2 mit einer axialen Stirnseite 3 auf. Der Stirnseite 3 liegt eine weitere axiale Stirnseite 4 des Statorkerns 2 gegenüber. Der Statorkern 2 ist hier exemplarisch als Statorblechpaket aus einer Vielzahl von axial geschichteten und gegeneinander elektrisch isolierten Einzelblechen aus einem weichmagnetischen Material ausgebildet. Innerhalb des Statorkerns 2 sind eine Vielzahl von in Umfangsrichtung verteilt angeordneten Nuten 5 ausgebildet, die sich von der Stirnseite 3 zur weiteren Stirnseite 4 erstrecken und von denen nur vier Stück illustrativ in Fig. 1 dargestellt sind.

Der Stator 1 weist ferner mehrere Formleiter 6 auf, die an der Stirnseite 3 aus dem Statorkern herausragen und an der Stirnseite 3 zwei jeweils ein freies Ende 7 des Formleiters 6 umfassende Endabschnitt 8 aufweisen. Anordnung der Endabschnitte 8, hier exemplarisch Paare der Endabschnitte 8, sind derart elektrisch leitfähig und mechanisch miteinander verbunden, dass jedes Paar einen Verbindungsabschnitt 9 ausbildet.

Die Formleiter 6 bilden eine Statorwicklung des Stators aus, die im vorliegenden Ausführungsbeispiel als Haarnadelwicklung (engl. hair pin winding) ausgebildet ist. Jeder Formleiter 6 weist dazu zwei Beinabschnitte 10, welche die freien Enden 7 ausbilden, und einen an der weiteren Stirnseite 4 angeordneten Kopfabschnitt 11 auf, welcher die Beinabschnitte elektrisch leitfähig verbindet. Die durch den Kopfabschnitt 11 verbundenen Beinabschnitte 10 sind in zwei Nuten 5 an unterschiedlichen Positionen in Umfangsrichtung angeordnet. Die Beinabschnitte 10 und der Kopfabschnitt 11 sind einstückig durch Biegen eines Metallstabs, insbesondere aus Kupfer, ausgebildet. An der Stirnseite 3 sind die Beinabschnitte 10 jenseits der Position, an der sie aus dem Statorkern 2 austreten, ebenfalls gebogen, sodass zwei Beinabschnitte 10 unterschiedlicher Formleiter 6 in unterschiedlichen Nuten 5 durch die Verbindungsabschnitte 9 miteinander verbunden sind. An den Stirnseiten 3, 4 bilden die Formleiter jeweils einen Wicklungskopf 12, 13 des Stators 1 aus.

Der Stator 1 weist ferner mehrere Isolationselemente 14 auf, die jeweils einen der Verbindungsabschnitte 9 einhüllen und aus einem elektrisch isolierenden Material gebildet sind. Die Isolationselemente 14 sind beispielsweise aus einem ausgehärteten Harz, beispielsweise ein Ein- oder Zweikomponentenharz, gebildet.

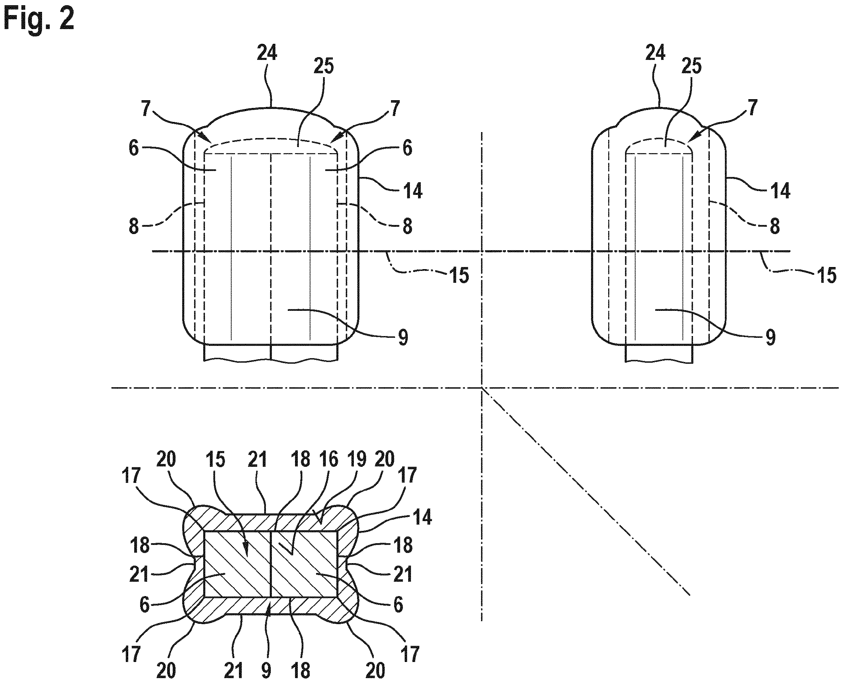

Fig. 2 ist eine Dreitafelprojektion des Stators 1 gemäß dem ersten Ausführungsbeispiel im Bereich eines der Isolationselemente 14. Die untere Abbildung zeigt dabei einen Schnitt durch eine Querschnittsebene 15.

Jeder Verbindungsabschnitt 9 weist in der Querschnittsebene 15 eine erste Querschnittsfläche 16 (weit schraffiert) auf. Die erste Querschnittsfläche 16 weist vier Eckabschnitte 17 und vier Seitenabschnitte 18, die zwischen den Eckabschnitten 17 liegen, auf. Jedes Isolationselement 14 weist eine zweite Querschnittsfläche 19 auf.

Die zweite Querschnittsfläche 19 weist für jeden Eckabschnitt 17 eine abgerundete Zusatzfläche 20 und zwischen den Zusatzflächen 20 liegende gerade Seiten 21 auf. Es sind also vier Zusatzflächen 20 und vier Seiten 21 vorgesehen. Jede Zusatzfläche 20 der zweiten Querschnittsfläche 19 des Isolationselements 14 erstreckt sich weiter in eine von ersten Querschnittsfläche 16 wegweisende Richtung als die beiden Seiten 21, die an die Zusatzfläche 20 angrenzen.

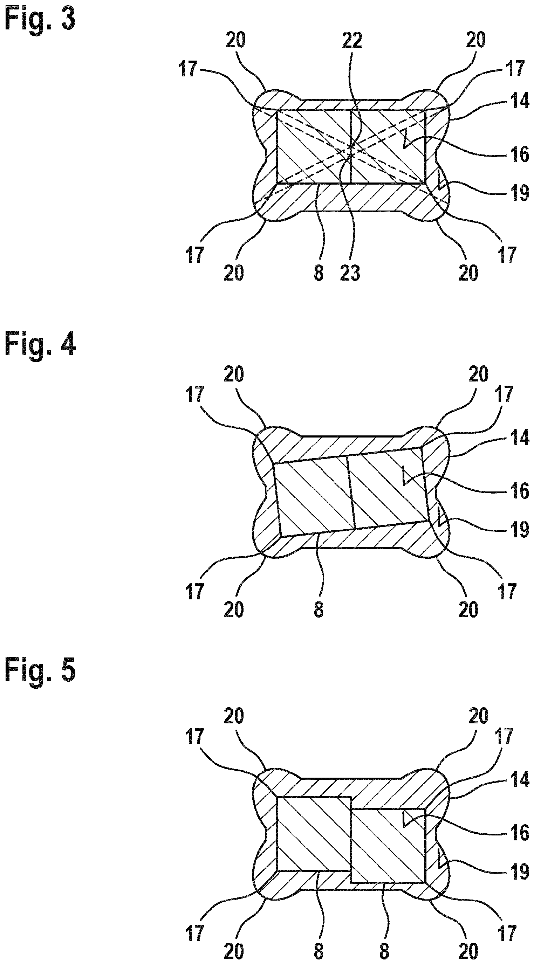

Fig. 3 bis Fig. 5 zeigen jeweils eine geschnittene Ansicht des Stators 1 gemäß dem ersten Ausführungsbeispiel zur Erläuterung von Fertigungstoleranzen, wobei die Darstellung der unteren Abbildung in Fig. 2 entspricht.

Bei der Fertigung des Stators 1 kann es dazu kommen, dass einzelne der Verbindungsabschnitte 9 nicht exakt auf einem Kreis bzw. nicht exakt auf einem von mehreren konzentrischen Kreisen liegen, etwa weil ein Biegeprozess der Formleiter 6 eine gewisse Toleranz aufweist.

In Fig. 3 sind dazu ein erster Mittelpunkt 22 der ersten Querschnittsfläche 16 und ein zweiter Mittelpunkt 23 der zweiten Querschnittsfläche 19 gezeigt, die durch einen Schnittpunkt von zwei die Eckabschnitte 17 bzw. die Zusatzflächen 20 verbindenden Diagonalen definierten sind. Bei dem Verbindungabschnitt 8 und dem ihn einhüllenden Isolationselement 14 sind die Mittelpunkte 22, 23 gegeneinander verschoben, sodass der kleinste Abstand eines jeweiligen Eckabschnitts 17 von einem Rand der ihm zugeordneten Zusatzfläche 20 größer ist als der kleinste Abstand der Seitenabschnitte 18 von den Seiten 21.

In Fig. 4 sind die Seitenabschnitte 18 der ersten Querschnittsfläche 16 gegenüber den Seiten 21 der zweiten Querschnittsfläche 19 verdreht, sodass der kleinste Abstand eines jeweiligen Eckabschnitts 17 von einem Rand der ihm zugeordneten Zusatzfläche 20 größer ist als der kleinste Abstand der Seitenabschnitte 18 von den Seiten 21.

In Fig. 5 sind zwei durch einen der Formleiter 6 des Paars bzw. der Anordnung ausgebildete Eckabschnitte 17 gegenüber den zwei durch den anderen der Formleiter 6 des Paars ausgebildeten Eckabschnitten 17 verschoben, sodass der kleinste Abstand eines jeweiligen Eckabschnitts 17 von einem Rand der ihm zugeordneten Zusatzfläche 20 größer ist als der kleinste Abstand der Seitenabschnitte 18 von den Seiten 21.

Durch die Zusatzflächen 20 kann somit bei toleranzbedingten Fehlpositionierung des Verbindungsabschnitts 9 bezüglich des Isolationselements 14 sowohl bei einer Verschiebung (Fig. 3) und einer Verdrehung (Fig. 4) als auch bei einem Versatz der Formleiter 6 zu einander (Fig. 5) eine ausreichende Materialstärke des Isolationselements 14 im Bereich der Eckabschnitte 17 gewährleistet werden, wo typischerweise die höchsten elektrischen Feldstärken auftreten.

Wieder mit Bezug zu Fig. 2 weist jedes Isolationselement 14 an den freien Enden 7 eine konvexe Auswölbung 24 auf. Durch diese wird eine ausreichende Materialstärke des Isolationselements 14 im Bereich der freien Enden 7 gewährleistet, wenn durch das stoffschlüssige Verbinden, also insbesondere das Verschweißen, der Endabschnitte 8 eine rundliche Materialansammlung 25 an den freien Enden 7 entsteht.

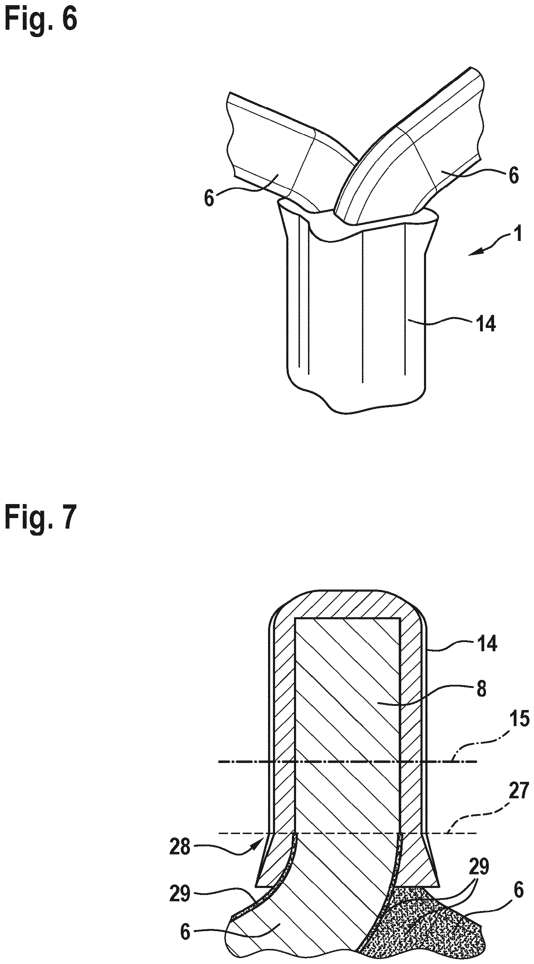

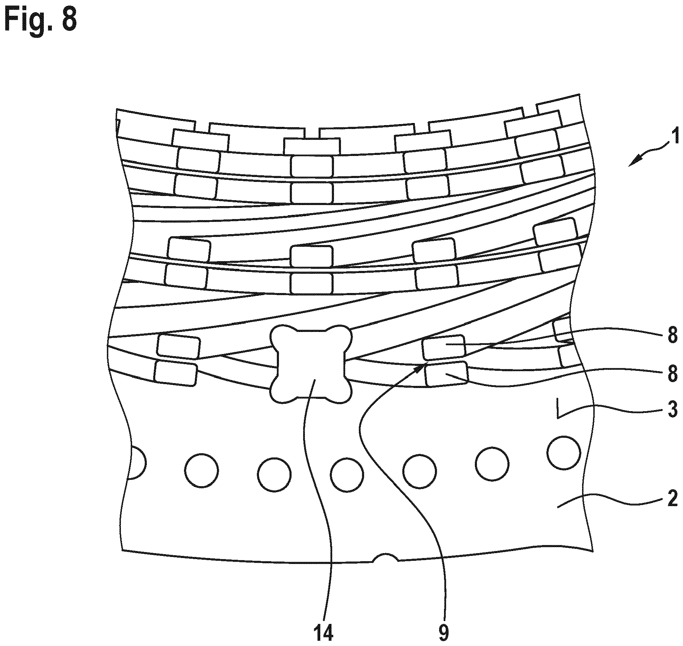

Fig. 6 bis Fig. 8 zeigen jeweils einen Stator 1 gemäß einem zweiten Ausführungsbeispiel, wobei Fig. 6 eine perspektivische Ansicht des Stators 1 im Bereich eines Isolationselements 14 ist, Fig. 7 eine geschnittene Ansicht des Stator 1 im Bereich des Isolationselements 14 ist und Fig. 8 eine Draufsicht auf den Stator 1 im Bereich des Isolationselements 14 ist. In Fig. 8 ist aus Gründen der Übersichtlichkeit nur ein einzelnes Isolationselement 14 gezeigt. Soweit im Folgenden nichts Abweichendes beschrieben wird, lassen sich alle Ausführungen zum ersten Ausführungsbeispiel auf die im Folgenden beschriebenen weiteren Ausführungsbeispiele übertragen, wobei gleiche oder gleichwirkende Komponenten mit identischen Bezugszeichen versehen sind.

Bei dem Stator 1 gemäß dem zweiten Ausführungsbeispiel weist jedes Isolationselement 14 von seinem dem Statorkern 2 zugewandten Ende 26 bis zu einer zwischen dem Ende 26 und der Querschnittsebene 15 liegenden Zwischenposition 27 einen sich zu den freien Enden 7 hin verjüngenden Verlauf auf und vergrößert an der Zwischenposition 27 unter Ausbildung eines Absatzes 28 seine Materialstärke. Dadurch können Biegungen der Formleiter 6 mit vom Isolationselement 14 abgedeckt werden.

Im Übrigen ist in Fig. 7 zu erkennen, dass die Formleiter 6 eine elektrisch isolierende Oberflächenbeschichtung 29 aufweisen. Im Bereich der Endabschnitte 8 sind die Formleiter 6 abisoliert, sodass das Isolationselement 14 unmittelbar auf einem elektrisch leitfähigen Material der Formleiter 6 aufliegt und die Isolationselemente 14 mit der Oberflächenbeschichtung 29 überlappen.

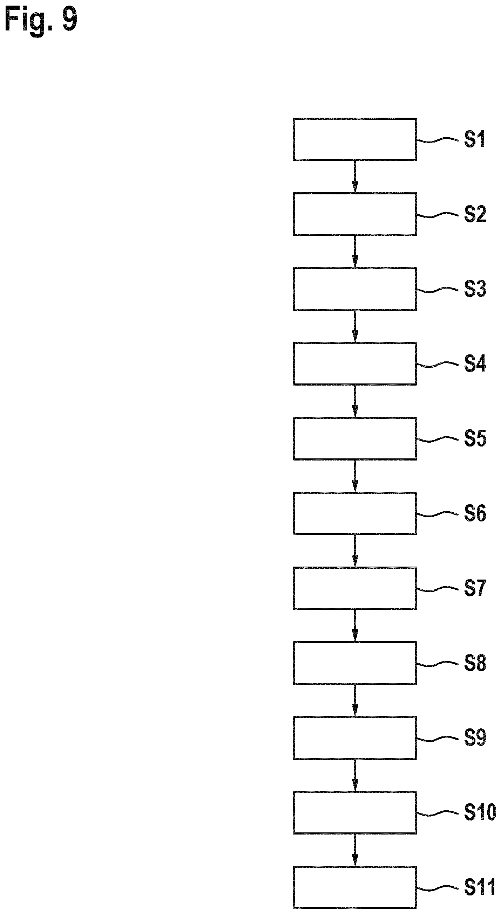

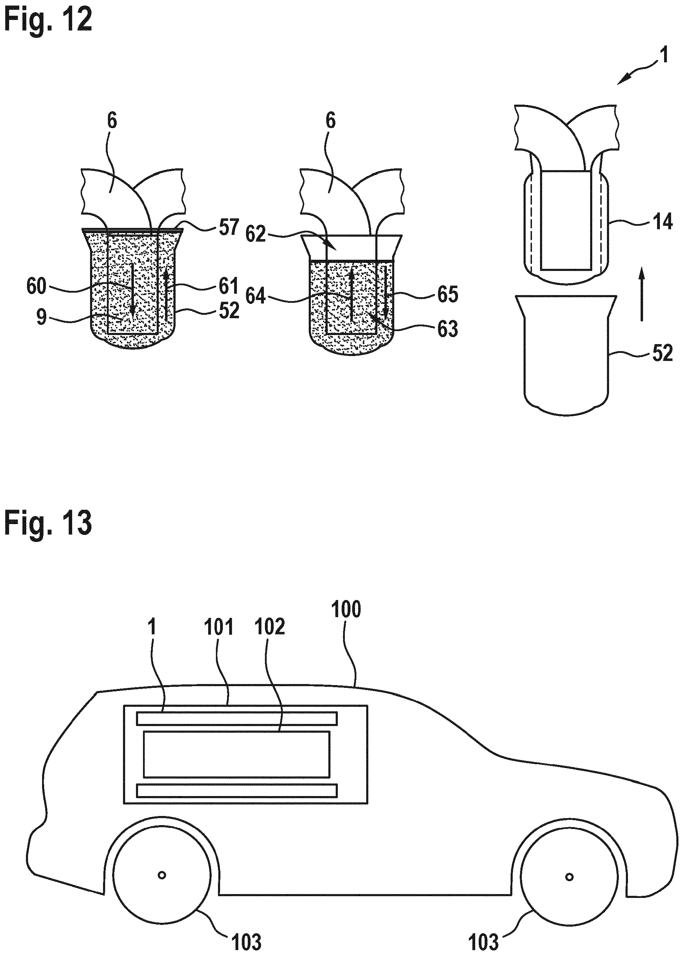

Fig. 9 ist ein Flussdiagramm eines ersten Ausführungsbeispiels eines Herstellungsverfahrens für einen Stator 1 gemäß einem der zuvor beschriebenen Ausführungsbeispiele oder einen Stator 1 gemäß einem dritten Ausführungsbeispiel, bei dem die Isolationselemente 14 wie in der rechten Abbildung von Fig. 12 gezeigt ausgebildet sind. Insoweit wird zur Beschreibung des Verfahrens auf die vorangegangenen Ausführungen und die Fig. 1 bis Fig. 8 Bezug genommen.

Das Verfahren umfasst einen Schritt S1 des Bereitstellens des Statorkerns 2 und der Formleiter 6, die unter Ausbildung der Verbindungsabschnitte 9 elektrisch leitfähig und mechanisch miteinander verbunden sind. Das Verfahren umfasst ferner einen Schritt S2 des Bereitstellens eines Ausführungsbeispiels eines Formwerkzeugs 50.

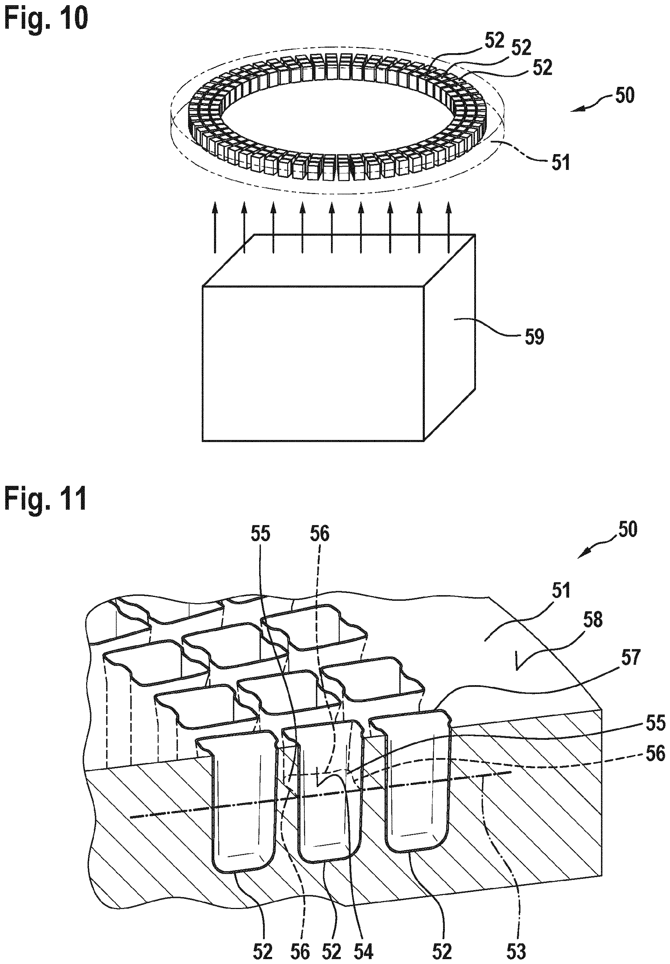

Fig. 10 und Fig. 11 zeigen das Formwerkzeug 50, wobei Fig. 10 eine perspektivische Darstellung ist und Fig. 11 eine geschnittene Darstellung ist.

Das Formwerkzeug 50 weist einen Formkörper 51 und mehrere entlang dreier konzentrischer Kreise angeordnete Sacklöcher 52 auf. Die Sacklöcher 52 sind jeweils dazu eingerichtet, einen der Verbindungsabschnitte 9 aufzunehmen. Dabei weist jedes Sackloch 52 eine in einer dritten Querschnittsebene 53 liegende dritte Querschnittsfläche 54 mit mehreren Zusatzflächen 55 und die Zusatzflächen verbindende Seiten 56 auf. Die Form der dritten Querschnittsfläche 54 entspricht dabei der zweiten Querschnittsfläche 19 und die Sacklöcher 52 bilden zumindest abschnittsweise Negative der Isolationselemente 14 aus. Die Sacklöcher 52 weisen ferner Auswurfschrägen auf, die mit einer einen Rand 57 der Sacklöcher bildenden Oberfläche 58 des Formkörpers 51 einen Winkel zwischen 2° und 4° einschließen.

Im vorliegenden Ausführungsbeispiel ist der Formkörper 51 für elektromagnetische Strahlen eines den Infrarotbereich und/oder den Bereich des sichtbaren Lichts und/oder den Ultraviolettbereich umfassenden Spektrums transluzent oder transparent, sodass die elektromagnetischen Strahlen aus dem Formkörper in die Sacklöcher 52 eindringen können. Der Formkörper kann dazu beispielsweise aus Quarzglas, einer Keramik, Polycarbonat, Polymethylmethacrylat (PMMA), Polyamid (PA), insbesondere PA12 amorph, oder aus einem Silikon mit oder ohne Glasgewebe oder Fasergewebe ausgebildet sein.

Das Formwerkzeug 50 weist ferner eine Quelle 59 für die elektromagnetischen Strahlen auf. Die Quelle 59 ist außerhalb des Formkörpers angeordnet ist, sodass die Strahlen durch eine optische Grenzfläche des Formkörpers 51 in diesen eindringen können.

Das Verfahren umfasst ferner einen Schritt S3 des Aufbringens eines die Haftfähigkeit des Formkörpers 51 reduzierenden Materials in die Sacklöcher 52. Dazu kann eine verlorene Form, z.B. aus Silikon, Polytetrafluorethylen (PTFE), Fluorethylen-Propylen (FEP) oder Perfluoralkoxy-Polymere (PFA) als die Haftfähigkeit reduzierenden Material vorgesehen sein oder die Sacklöcher 52 können mit einem Trennwachs, Trennspray oder Trennlack als flüssig aufzubringendem Material benetzt werden.

Das Verfahren umfasst ferner einen Schritt S5 des Einfüllens eines fließfähigen oder pulverigen Einhüllungsmaterials in die Sacklöcher 52. Das Einhüllungsmaterial ist das bereits zuvor beschriebene Harz in einem fließfähigen, noch nicht ausgehärteten Zustand oder ein Pulver, beispielsweise ein in Pulverform vorliegendes Harz.

In einem Schritt S6 des Verfahrens werden die Endabschnitte 8 bzw. die Verbindungsabschnitte 9 erwärmt.

In einem Schritt S7 des Verfahrens werden die Verbindungsabschnitte 9 in die Sacklöcher 52 eingeführt. Dazu zeigt die linke Abbildung von Fig. 12 durch einen Pfeil 60 die Einführrichtung. Durch das Einführen steigt das Einhüllungsmaterial gemäß einem Pfeil 61 innerhalb des Sacklochs 52 zum Rand 57 des Sacklochs 52 hin. Das Verfahren umfasst ferner einen Schritt S9 des Umfließen-Lassens der Verbindungsabschnitte 9 durch das Einhüllungsmaterial.

Wie in der mittleren Abbildung von Fig. 12 gezeigt, wird sodann in einem Schritt S8 des Verfahrens ein erster Teil 62 der Verbindungsabschnitte 9 aus den Sacklöchern 52 entgegen der Einführrichtung entfernt, sodass der erste Teil 63 der Verbindungsabschnitte 9 durch das Einhüllungsmaterial benetzt ist und ein zweiter Teil 62 der Verbindungsabschnitte 9 innerhalb des Einhüllungsmaterials verbleibt. Durch das Entfernen entlang der durch einen Pfeil 64 dargestellten Richtung sinkt der Stand das Einhüllungsmaterial im Sackloch 52 entsprechend einem Pfeil 65 ab.

In einem Schritt S9 des Verfahrens erfolgt ein Überführen des Einhüllungsmaterials in eine feste, einstückige Form, sodass die Vergussmasse die die Verbindungsabschnitt 9 einhüllenden Isolationselemente 14 ausbildet. Das Überführen dauert zumindest so lange bis das fließfähige Einhüllungsmaterial geliert ist und umfasst ein Bestrahlen der Vergussmasse mit den elektromagnetischen Stahlen durch die Quelle 59. Im Falle eines pulverigen Einhüllungsmaterials erfolgt das Überführen in die feste, einstückige Form durch Wirbelsintern, sodass das sich Pulver im Sackloch 52 vernetzt.

Daran schließt sich ein in der rechten Abbildung von Fig. 12 illustrierten Schritt S10 des Entfernens der Verbindungsabschnitte 9 mit den sie einhüllenden Isolationselementen 14 aus dem Formwerkzeug an. Abschließend kann in einem Schritt S11 ein Imprägnierprozesses mit weiterer Aushärtung der Isolationselemente 14 erfolgen.

Gemäß einem weiteren Ausführungsbeispiel des Herstellungsverfahrens und des Formwerkzeugs 50 sind die Sacklöcher 52 mit einer eine Haftfähigkeit des Formkörpers 51 reduzierenden Beschichtung fest ausgekleidet sein. Die Beschichtung kann ebenfalls Silikon, PTFE, FEP oder PFA umfassen. In diesem Fall kann der Schritt S3 ausgelassen werden.

Gemäß einem weiteren Ausführungsbeispiel ist die Quelle 59 innerhalb des Formkörpers 51 angeordnet.

Gemäß einem weiteren Ausführungsbeispiel des Herstellungsverfahrens und des Formwerkzeugs 50 weist es keine Quelle auf und der Formkörper 51 kann opak sein. In diesem Fall umfasst der Schritt S9 statt des Bestrahlens ein Erwärmen des Einhüllungsmaterials, beispielsweise mittels Stromwärme, eines Ofens, Infrarotstrahlung oder Induktion. Es ist aber auch eine Kaltaushärtung des Einhüllungsmaterials möglich.

Fig. 13 ist eine Prinzipskizze eines Ausführungsbeispiels eines Fahrzeugs 100 mit einem Ausführungsbeispiel einer elektrischen Maschine 101.

Die elektrische Maschine 101, beispielsweise ein permanent oder elektrisch erregter Synchronmotor oder ein Asynchronmotor, weist einen Stator 1 gemäß einem der zuvor beschriebenen Ausführungsbeispiele oder einen durch das Verfahren gemäß einem der zuvor beschriebenen Ausführungsbeispiele erhaltenen Stator 1 sowie einen Rotor 102 auf. Der Rotor 102 ist drehbar bezüglich des Stators 1 gelagert.

Das Fahrzeug 100 weist ferner Räder 103 auf. Die elektrische Maschine 101 ist dazu eingerichtet ist, wenigstens eines der Räder 103 indirekt, beispielsweise über ein Getriebe (nicht gezeigt) anzutreiben oder direkt, beispielsweise in Gestalt eines Radnabenmotors, anzutreiben. Das Fahrzeug 100 kann ferner eine mit dem Rad 103 gekoppelte Achse (nicht gezeigt) aufweisen, die die elektrische Maschine 101 des Fahrzeugs 101 direkt oder indirekt antreibt.

Das erfindungsgemäße Fahrzeug 100 ist ein batterieelektrisches Fahrzeug (BEV), ein mittels einer Brennstoffzelle betriebenes Fahrzeug oder ein Hybridfahrzeug. Im letzteren Fall weist das Fahrzeug 100 ferner einen Verbrennungsmotor (nicht gezeigt) auf.

## Patentansprüche

1. Stator (1) für eine elektrische Maschine (101), aufweisend:
- einen Statorkern (2), der eine axiale Stirnseite (3) aufweist;
- mehrere Formleiter (6), die an der Stirnseite (3) aus dem Statorkern (2) herausragen und jeweils an der Stirnseite (3) wenigstens einen ein freies Ende (7) des Formleiters (6) umfassenden Endabschnitt (8) aufweisen, wobei Anordnungen von wenigstens zwei der Endabschnitte (8) derart elektrisch leitfähig und mechanisch miteinander verbunden sind, dass jede Anordnung einen Verbindungsabschnitt (9), der eine erste in einer vorgegebenen Querschnittsebene (15) liegende erste Querschnittsfläche (16), die Eckabschnitte (17) und zwischen den Eckabschnitten liegenden Seitenabschnitte (18) aufweist, aufweist, ausbildet; und
- mehrere Isolationselemente (14), die jeweils wenigstens einen der Verbindungsabschnitte (9) einhüllen und aus einem elektrisch isolierenden Material gebildet sind;
**dadurch gekennzeichnet,**
**dass** jedes Isolationselement (9) eine in der Querschnittsebene (15) liegende zweite Querschnittsfläche (19) aufweist, die für jeden Eckabschnitt (17) der ersten Querschnittsfläche (16) des durch das Isolationselement (14) eingehüllten Verbindungsabschnitts (9) eine Zusatzfläche (20) und zwischen den Zusatzflächen (20) liegende Seiten (21) aufweist, wobei sich eine jeweilige der Zusatzflächen (20) weiter in eine von ersten Querschnittsfläche (16) wegweisende Richtung erstreckt als die Seiten (21), die an die Zusatzfläche (20) angrenzen.

2. Stator nach Anspruch 1, wobei
die Zusatzflächen (20) einen geringeren Radius als die Seiten (21) aufweisen.

3. Stator nach Anspruch 1 oder 2, wobei
die erste Querschnittsfläche (16) vier der Eckabschnitte (17) aufweist, einen durch einen Schnittpunkt von zwei im Umfang nicht benachbarte Eckabschnitte (17) verbindenden Diagonalen definierten ersten Mittelpunkt (22) aufweist und die zweite Querschnittsfläche (19) vier der Zusatzflächen (20) aufweist, einen durch einen Schnittpunkt von zwei im Umfang nicht benachbarte Zusatzflächen (20) verbindenden Diagonalen definierten zweiten Mittelpunkt (23) aufweist, wobei bei zumindest einem Teil der Verbindungsabschnitte (9) und der sie einhüllenden Isolationselemente (14) die Mittelpunkte (22, 23) gegeneinander verschoben sind, sodass der kleinste Abstand eines jeweiligen Eckabschnitts (17) von einem Rand der ihm zugeordneten Zusatzfläche (20) größer ist als der kleinste Abstand der Seitenabschnitte (18) von den Seiten (21) der zweiten Querschnittsfläche (19).

4. Stator nach einem der vorhergehenden Ansprüche, wobei
bei zumindest einem Teil der Verbindungsabschnitte (9) und der sie einhüllenden Isolationselemente (14) die Seitenabschnitte (18) der ersten Querschnittsfläche (16) gegenüber den Seiten (21) der zweiten Querschnittsfläche (19) verdreht sind, sodass der kleinste Abstand eines jeweiligen Eckabschnitts (17) von einem Rand der ihm zugeordneten Zusatzfläche (20) größer ist als der kleinste Abstand der Seitenabschnitte (18) von den Seiten (21) der zweiten Querschnittsfläche (19).

5. Stator nach einem der vorhergehenden Ansprüche, wobei
bei zumindest einem Teil der Verbindungsabschnitte (9) und der sie einhüllenden Isolationselemente (14) die zwei durch einen der Formleiter (6) der Anordnung ausgebildeten Eckabschnitte (17) gegenüber den zwei durch den oder einen anderen der Formleiter (6) der Anordnung ausgebildeten Eckabschnitten (17) verschoben sind, sodass der kleinste Abstand eines jeweiligen Eckabschnitts (17) von einem Rand der ihm zugeordneten Zusatzfläche (20) größer ist als der kleinste Abstand der Seitenabschnitte (18) von den Seiten (21) der zweiten Querschnittsfläche (19).

6. Stator nach einem der vorhergehenden Ansprüche, wobei
jedes Isolationselement (14)
- an den freien Enden (7) eine konvexe Auswölbung (24) aufweist und/oder
- dass jedes Isolationselement (14) einen sich von seinem dem Statorkern (2) zugewandten Ende (26) zu einer zwischen dem Ende (26) und der Querschnittsebene (15) liegenden Zwischenposition (27) hin verjüngenden Verlauf aufweist.

7. Formwerkzeug (50) zur Herstellung eines Stators (1) für eine elektrische Maschine (101), insbesondere nach einem der vorhergehenden Ansprüche, mit einem Formkörper (51) und mehreren entlang eines Kreises angeordneten Sacklöchern (52), die dazu jeweils eingerichtet sind, einen Verbindungsabschnitt (9), der durch eine Anordnung von wenigstens zwei ein freies Ende (7) von Formleitern (6) des Stators (1) umfassenden Endabschnitten (8), die elektrisch leitfähig und mechanisch miteinander verbunden sind, gebildet ist, und ein fließfähiges oder pulveriges Einhüllungsmaterial aufzunehmen.

8. Formwerkzeug nach Anspruch 7, wobei
jedes Sackloch (52) eine in einer Querschnittsebene (53) liegende Querschnittsfläche (54) mit mehreren Zusatzflächen (55) und die Zusatzflächen (55) verbindende Seiten (56) aufweist und sich eine jeweilige der Zusatzflächen (55) jeweils weiter nach außen erstreckt als die an die jeweilige Zusatzfläche (55) angrenzenden Seiten (56).

9. Formwerkzeug nach Anspruch 7 oder 8, wobei
der Formkörper (51) zumindest abschnittsweise für elektromagnetische Strahlen eines den Infrarotbereich und/oder den Bereich des sichtbaren Lichts und/oder den Ultraviolettbereich umfassenden Spektrums transluzent oder transparent ist, sodass die elektromagnetischen Strahlen aus dem Formkörper (51) in die Sacklöcher (52) eindringen können.

10. Formwerkzeug nach Anspruch 9, ferner umfassend
wenigstens eine Quelle (59) für die elektromagnetischen Strahlen, wobei die Quelle (59)
- innerhalb des Formkörpers (51) angeordnet ist und/oder
- außerhalb des Formkörpers (51) angeordnet ist, sodass die Strahlen durch eine optische Grenzfläche des Formkörpers (51) in diesen eindringen können.

11. Verfahren zur Herstellung eines Stators (1) für eine elektrische Maschine (101), insbesondere nach einem der vorhergehenden Ansprüche, aufweisend folgende Schritte:
- Bereitstellen eines Formwerkzeugs (50) nach einem der Ansprüche 7 bis 10;
- Bereitstellen eines Statorkerns (2), der eine axiale Stirnseite (3) aufweist, und mehrerer Formleiter (6), die an der Stirnseite (3) aus dem Statorkern (2) herausragen und jeweils an der Stirnseite (3) wenigstens einen ein freies Ende (7) des Formleiters (6) umfassenden Endabschnitt (8) aufweisen, wobei Anordnungen von wenigstens zwei der Endabschnitte (8) derart elektrisch leitfähig und mechanisch miteinander verbunden sind, dass jede Anordnung einen Verbindungsabschnitt (9), der eine erste in einer vorgegebenen Querschnittsebene (15) liegende erste Querschnittsfläche (16), die Eckabschnitte (17) und zwischen den Eckabschnitten (17) liegenden Seitenabschnitte (18) aufweist, aufweist, ausbildet;
- Einfüllen eines fließfähigen oder pulverigen Einhüllungsmaterials in die Sacklöcher (52);
- Einführen der Verbindungsabschnitte (9) in die Sacklöcher (52);
- Einhüllen-Lassen der Verbindungsabschnitte (9) durch das Einhüllungsmaterial; und
- Überführen des Einhüllungsmaterials in eine feste, einstückige Form, sodass das Einhüllungsmaterial mehrere Isolationselemente (14) ausbildet, die jeweils wenigstens einen der Verbindungsabschnitte (9) einhüllen und sodass jedes Isolationselement (14) eine in der Querschnittsebene (15) liegende zweite Querschnittsfläche (19) aufweist, die für jeden Eckabschnitt (17) der ersten Querschnittsfläche (16) des durch das Isolationselement (14) eingehüllten Verbindungsabschnitts (9) eine Zusatzfläche (20) und zwischen den Zusatzflächen (20) liegende Seiten (21) aufweist, wobei sich eine jeweilige der Zusatzflächen (20) weiter in eine von ersten Querschnittsfläche (16) wegweisende Richtung erstreckt als die Seiten (21), die an die Zusatzfläche (20) angrenzen.

12. Verfahren nach Anspruch 11, wobei
das Einführen der Verbindungsabschnitte (9) entlang einer Einführrichtung bis zu einer, insbesondere durch einen Anschlag in den Sacklöchern (52) vorgegebenen, Einführposition erfolgt und das Verfahren ferner folgenden zwischen dem Schritt des Umfließen-Lassens und dem Schritt des Aushärtens durchgeführten Schritt aufweist:
- Entfernen eines ersten Teils (62) der Verbindungsabschnitte (9) aus den Sacklöchern (52) entgegen der Einführrichtung, sodass der erste Teil (62) der Verbindungsabschnitte (9) durch das Einhüllungsmaterial benetzt ist und ein zweiter Teil (63) der Verbindungsabschnitte (9) innerhalb des Einhüllungsmaterials verbleibt.

13. Verfahren nach Anspruch 11 oder 12, wobei ein Formwerkzeug nach Anspruch 9 verwendet wird, wobei
der Schritt des Überführen des Einhüllungsmaterials in eine feste, einstückige Form ein Bestrahlen des Einhüllungsmaterials mit den elektromagnetischen Strahlen umfasst.

14. Verfahren nach einem der Ansprüche 11 bis 13, wobei
- der Schritt des Überführen des Einhüllungsmaterials in eine feste, einstückige Form ein Erwärmen des Einhüllungsmaterials umfasst und/oder
- das Verfahren ferner folgenden vor dem Schritt des Einführens durchgeführten Schritt aufweist: Erwärmen der Endabschnitte (8).

15. Elektrische Maschine (101) für ein elektrisch antreibbares Fahrzeug (100), aufweisend einen Rotor (102) und einen Stator (1) nach einem der Ansprüche 1 bis 6 oder einen durch ein Verfahren nach einem der Ansprüche 11 bis 14 erhaltenen Stator (1), wobei der Rotor (102) drehbar im Statorkern (2) gelagert ist.
